# FASCICULE DE BREVET EUROPEEN

(11) **EP 4 103 830 B1**
(45) Date de publication et mention de la délivrance du brevet: **10.07.2024**
(21) Numéro de dépôt: 21707345.1
(22) Date de dépôt: 03.02.2021
(51) Int. Cl.: F02K 1/76, F01D 21/14

(54) **PROCÉDÉ ET SYSTÈME DE COMMANDE D'UN INVERSEUR DE POUSSÉE D'UN AÉRONEF**
VERFAHREN UND SYSTEM ZUM STEUERN EINER SCHUBUMKEHRVORRICHTUNG EINES FLUGZEUGS
METHOD AND SYSTEM FOR CONTROLLING A THRUST REVERSER OF AN AIRCRAFT

(30) Priorité: 11.02.2020 FR 2001326
(43) Date de publication de la demande: 21.12.2022
(73) Titulaire: SAFRAN AIRCRAFT ENGINES, 75015 Paris (FR)
(72) Inventeur: BUJON, Irène, 77550 MOISSY-CRAMAYEL (FR); LECORDIX, Jean-Loïc Hervé, 77550 MOISSY-CRAMAYEL (FR)
(74) Mandataire: Cabinet Camus Lebkiri
(86) Numéro de dépôt international: PCT/FR2021/050197
(87) Numéro de publication internationale: WO 2021/160953

(56) Documents cités:
- EP-A1- 3 129 631
- US-A- 3 279 184
- US-A1- 2015 275 821
- US-A1- 2017 226 963

## Description

### DOMAINE TECHNIQUE DE L'INVENTION

Le domaine technique de l'invention est celui des inverseurs de poussée de turboréacteur pour aéronef. L'invention concerne plus particulièrement un procédé et un système de commande d'un inverseur de poussée à portes lors d'un décollage avorté de l'aéronef.

### ARRIERE-PLAN TECHNOLOGIQUE DE L'INVENTION

Le rôle d'un inverseur de poussée de turboréacteur est d'améliorer la capacité de freinage d'un aéronef, lors de l'atterrissage ou d'un décollage avorté de l'aéronef, en redirigeant vers l'avant du turboréacteur au moins une partie du flux de gaz généré par la combustion et/ou une partie du flux d'air froid généré par une soufflante, dans le cas d'un turboréacteur à double flux. Les moyens permettant de réaliser cette redirection de flux varient suivant le type d'inverseur de poussée.

Un inverseur de poussée du type à portes comprend au moins deux portes pivotantes par rapport à une nacelle abritant le turboréacteur. Ces portes peuvent être déplacées par l'intermédiaire de vérins entre une position fermée, dans laquelle elles s'assurent la continuité d'une veine aérodynamique, et une position ouverte ou déployée, dans laquelle elles obstruent cette veine aérodynamique et redirigent le flux circulant à l'intérieur.

L'inverseur de poussée comprend également un système de verrouillage pour maintenir les portes en position fermée sans mettre en charge les vérins tant qu'une inversion de poussée n'est pas demandée.

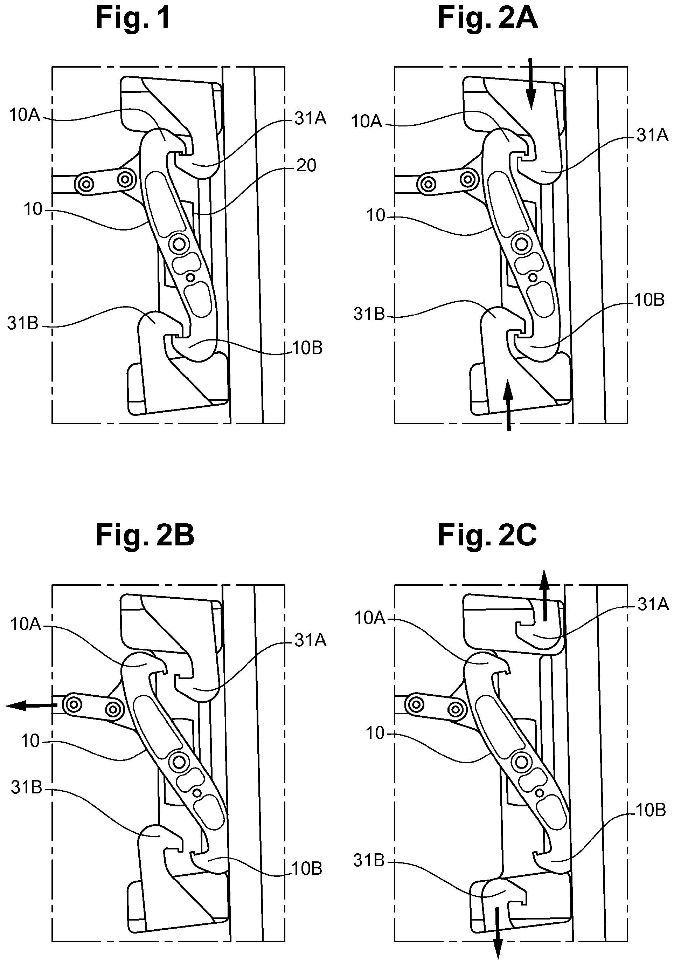

La figure 1 représente un exemple connu de système de verrouillage comprenant un crochet 10 en forme de S disposé entre les deux portes (non représentées) et monté rotatif sur un support 20 lié à la nacelle. Une première extrémité 10A du crochet 10 en forme de S coopère avec un premier crochet de verrouillage 31A solidaire de l'une des deux portes et une deuxième extrémité 10B opposée du crochet 10 en forme de S coopère avec un deuxième crochet de verrouillage 31B solidaire de l'autre porte.

Les figures 2A-2C représentent la séquence de déploiement d'un inverseur de poussée à portes muni du système de verrouillage de la figure 1. Lors d'une première phase représentée par la figure 2A, les vérins sont commandés de manière à amener les portes dans une position sur-fermée, afin de créer un jeu entre les extrémités 10A-10B du crochet 10 en forme de S et les crochets de verrouillage 31A-31B des portes. Puis, lors d'une deuxième phase illustrée par [Fig. 2B], le crochet 10 en forme de S est actionné en rotation pour libérer les crochets de verrouillage 31A-31B des extrémités 10A-10B. Les vérins peuvent alors être commandés, lors d'une troisième phase illustrée par la figure 2C, de façon à ouvrir les portes. Les crochets de verrouillage 31A-31B s'éloignent alors du crochet 10 en forme de S.

Le passage de la position fermée (Fig. 1) à la position sur-fermée (Fig. 2A) et le retour à la position fermée, à partir de laquelle commence l'ouverture proprement dite des portes ([Fig. 2C]), augmente la durée de déploiement de l'inverseur de poussée et retarde par conséquent sa mise en service. Or dans le cas d'un décollage avorté, il est important de déployer l'inverseur de poussée le plus tôt possible pour réduire la distance de freinage, car l'aéronef est lourd du fait du carburant embarqué et a déjà parcouru une portion significative de la piste de décollage.

La séquence de déploiement des figures 2A-2C est actuellement employée quel que soit le scénario d'utilisation de l'inverseur de poussée : atterrissage ou décollage avorté. Autrement dit, il n'existe pas d'optimisation de la séquence de déploiement pour la rendre plus rapide dans le cas d'un décollage avorté.

L'arrière-plan technique comprend notamment les documents US 2017/226963 et US3279 184.

### RESUME DE L'INVENTION

L'invention a pour but de réduire la distance de freinage d'un aéronef équipé d'un inverseur de poussée à portes lors d'un décollage avorté de l'aéronef.

Selon un premier aspect de l'invention, on tend vers cet objectif en prévoyant un procédé de commande d'un inverseur de poussée de turboréacteur, l'inverseur de poussée comprenant :
- des portes mobiles entre une position fermée dans laquelle les portes assurent la continuité d'une veine aérodynamique, une position sur-fermée dans laquelle les portes rentrent partiellement dans la veine aérodynamique et une position déployée dans laquelle les portes détournent au moins une partie d'un flux parcourant la veine aérodynamique pour générer une poussée inverse ;
- des actionneurs de porte configurés pour déplacer les portes entre les positions fermée, sur-fermée et déployée ;
- un dispositif de verrouillage des portes dans la position fermée, mobile entre une position de verrouillage et une position de déverrouillage ;
- un actionneur de verrou configuré pour déplacer le dispositif de verrouillage entre les positions de verrouillage et de déverrouillage ;
le procédé comprenant les étapes suivantes :
- diminuer le régime moteur du turboréacteur en suivant une valeur de consigne inférieure à une première valeur seuil de régime moteur à laquelle les efforts aérodynamiques s'exerçant sur les portes sont égaux aux efforts développés par les actionneurs de porte ;
- commander les actionneurs de porte de façon à amener les portes dans la position sur-fermée ;
- commander l'actionneur de verrou de façon à amener le dispositif de verrouillage dans la position de déverrouillage ; et
- lorsque le dispositif de verrouillage est dans la position de déverrouillage, commander les actionneurs de porte de façon à amener les portes dans la position déployée ;

Le procédé de commande selon le premier aspect de l'invention est remarquable en ce que la valeur de consigne du régime moteur est supérieure au régime de ralenti.

Une valeur de consigne de régime moteur supérieure au régime de ralenti permet au turboréacteur de décélérer moins bas afin d'effectuer la sur-fermeture des portes et donc de produire une poussée inverse plus importante dès que le déploiement de l'inverseur de poussée est achevé. La distance de freinage en cas de décollage avorté de l'aéronef peut ainsi être diminuée.

Dans un mode de mise en oeuvre préférentiel du procédé de commande, les actionneurs de porte sont avantageusement commandés de façon à amener les portes dans la position sur-fermée avant que le régime moteur n'atteigne la première valeur seuil de régime moteur. Le déploiement de l'inverseur de poussée peut ainsi commencer et se terminer plus tôt, ce qui permet de diminuer encore plus la distance de freinage.

Pour raccourcir la séquence de déploiement de l'inverseur de poussée, les actionneurs de porte et l'actionneur de verrou peuvent être commandés simultanément pour amener respectivement les portes dans la position sur-fermée et le dispositif de verrouillage dans la position de déverrouillage.

Outre les caractéristiques qui viennent d'être évoquées dans les paragraphes précédents, le procédé de commande selon le premier aspect de l'invention peut présenter une ou plusieurs caractéristiques complémentaires parmi les suivantes, considérées individuellement ou selon toutes les combinaisons techniquement possibles :
- la valeur de consigne du régime moteur est comprise entre 70 % et 95 % de la première valeur seuil de régime moteur ;
- les actionneurs de porte sont commandés de façon à amener les portes dans la position sur-fermée tant que le dispositif de verrouillage n'est pas dans la position de déverrouillage ;
- les actionneurs de porte sont commandés de façon à amener les portes dans la position déployée dès lors que le dispositif de verrouillage passe dans la position de déverrouillage ; et
- la première valeur seuil de régime moteur correspond à une valeur minimale des efforts développés par les actionneurs de porte et les actionneurs de porte sont commandés de façon à amener les portes dans la position sur-fermée au plus tard lorsque le régime moteur atteint une deuxième valeur seuil de régime moteur correspondant à une valeur maximale des efforts développés par les actionneurs de porte.

Un deuxième aspect de l'invention concerne un système de commande d'un inverseur de poussée comprenant des moyens configurés pour mettre en oeuvre un procédé de commande selon le premier aspect de l'invention.

Dans un mode de réalisation, le système de commande comprend :
- une unité de commande directionnelle configurée pour alimenter en énergie les actionneurs de porte et l'actionneur de verrou ;
- une unité de commande d'isolation configurée pour isoler l'unité de commande directionnelle d'une source d'alimentation ;
- un calculateur configuré pour piloter l'unité de commande directionnelle et l'unité de commande d'isolation.

L'invention et ses différentes applications seront mieux comprises à la lecture de la description qui suit et à l'examen des figures qui l'accompagnent.

### BREVE DESCRIPTION DES FIGURES

D'autres caractéristiques et avantages de l'invention ressortiront clairement de la description qui en est donnée ci-dessous, à titre indicatif et nullement limitatif, en référence aux figures annexées, parmi lesquelles :
[Fig. 1] représente un système de verrouillage des portes d'un inverseur de poussée de turboréacteur selon l'art antérieur ;
[Fig. 2A], [Fig. 2B] et [Fig. 2C] représentent différentes phases d'une séquence de déploiement d'un inverseur de poussée à portes muni du système de verrouillage de la figure 1 ;
[Fig. 3] est une représentation schématique d'un inverseur de poussée à portes d'un turboréacteur et d'un système de commande hydraulique capable de mettre en oeuvre le procédé de commande selon le premier aspect de l'invention ;
[Fig. 4] représente le régime moteur du turboréacteur lorsque l'inverseur de poussée est commandé d'une façon classique et lorsque le procédé de commande selon le premier aspect de l'invention est appliqué ; et
[Fig. 5] représente deux valeurs seuil du régime moteur à partir desquelles commence la séquence de déploiement de l'inverseur de poussée, suivant la puissance disponible pour actionner les portes.

Pour plus de clarté, les éléments identiques ou similaires sont repérés par des signes de référence identiques sur l'ensemble des figures.

### DESCRIPTION DETAILLEE

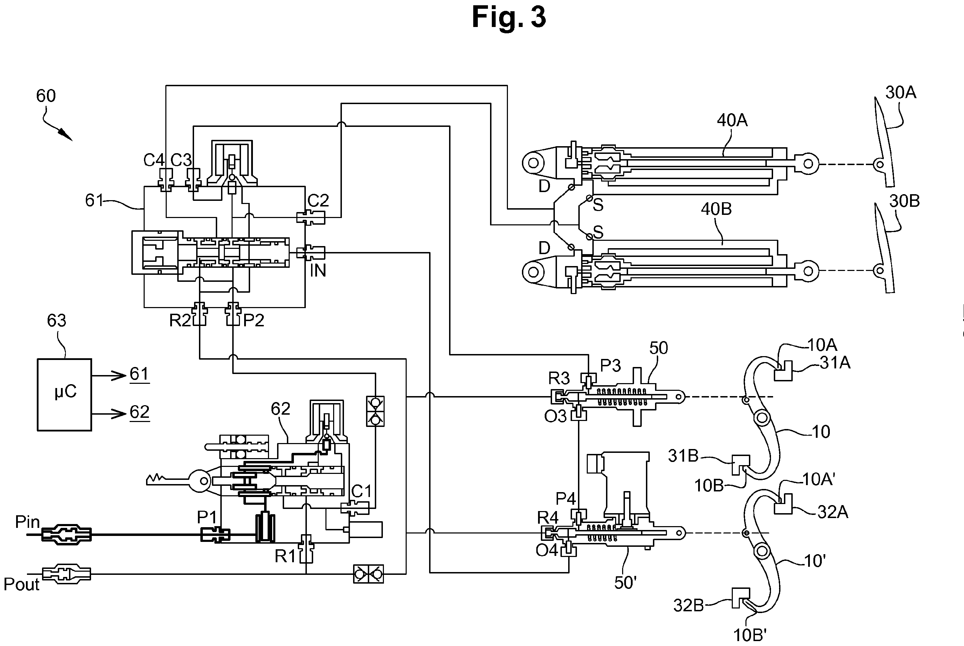

La figure 3 représente schématiquement un exemple d'inverseur de poussée de turboréacteur pour aéronef et un exemple de système de commande 60 grâce auxquels le procédé de commande d'inverseur de poussée selon l'invention va être décrit.

L'inverseur de poussée est de type à portes et comprend :
- une première porte 30A et une deuxième porte 30B, mobiles entre une position fermée, une position sur-fermée et une position ouverte ou déployée ;
- un premier actionneur de porte 40A relié à la première porte 30A et un deuxième actionneur de porte 40B relié à la deuxième porte 30B, permettant de déplacer les portes 30A-30B entre les positions fermée, sur-fermée et déployée ;
- un premier dispositif de verrouillage 10 et un deuxième dispositif de verrouillage 10', mobiles entre une première position dite de verrouillage des portes 30A-30B dans la position fermée et une deuxième position dite de déverrouillage autorisant l'ouverture des portes ; et
- un premier actionneur de verrou 50 relié au premier dispositif de verrouillage 10 et un deuxième actionneur de verrou 50' relié au deuxième dispositif de verrouillage 10', configurés pour déplacer les dispositifs de verrouillage 10-10' entre les positions de verrouillage et déverrouillage.

Les portes 30A-30B peuvent être montées pivotantes par rapport à une nacelle dans laquelle est logé le turboréacteur. Elles sont par exemple positionnées de manière diamétralement opposée par rapport à un axe longitudinal de la nacelle. Dans la position fermée, les portes 30A-30B assurent la continuité d'une veine aérodynamique délimitée intérieurement par la nacelle, typiquement la veine aérodynamique de flux secondaire dans le cas d'un turboréacteur à double flux. Dans la position sur-fermée, les portes 30A-30B rentrent partiellement dans la veine aérodynamique et le flux qui circule dans la veine aérodynamique lors du fonctionnement du turboréacteur exerce une pression sur les portes 30A-30B. Dans la position déployée, les portes 30A-30B obstruent la veine aérodynamique et détournent au moins une partie du flux vers l'amont du turboréacteur pour générer une poussée inverse.

Les portes 30A-30B de l'inverseur de poussée sont de préférence déplacées simultanément dans la position fermée, la position sur-fermée ou la position déployée par les actionneurs de portes 40A-40B.

Les dispositifs de verrouillage 10-10' sont par exemple positionnés entre les portes 30A-30B de façon diamétralement opposée par rapport à l'axe longitudinal de la nacelle.

Les dispositifs de verrouillage 10-10' sont de préférence des crochets en forme de S, tels que décrits précédemment en relation avec la figure 1. Ils peuvent être montés pivotants par rapport à un support (non représenté) fixé à la nacelle. Le premier crochet 10 en forme de S comprend une première extrémité 10A apte à coopérer avec un premier crochet de verrouillage 31A de la première porte 30A et une deuxième extrémité 10B opposée apte à coopérer avec un premier crochet de verrouillage 31B de la deuxième porte 30B. Le deuxième crochet 10' en forme de S comprend une première extrémité 10A' apte à coopérer avec un deuxième crochet de verrouillage 32A de la première porte 30A et une deuxième extrémité 10B' opposée apte à coopérer avec un deuxième crochet de verrouillage 32B de la deuxième porte 30B.

Le système de commande 60 de l'inverseur de poussée comprend de préférence une unité de commande directionnelle appelée ci-après « DCU » (pour « Directional Control Unit » en anglais) 61, une unité de commande d'isolation 62 appelée ci-après « ICU » (pour « Isolation Control Unit ») et un calculateur 63.

Dans l'exemple de la figure 3, le système de commande 60 est un système de commande hydraulique, car les actionneurs de porte 40A-40B sont constitués de vérins hydrauliques, le premier actionneur de verrou 50 est un verrou hydraulique primaire appelé ci-après « HPL » (pour « Hydraulic Primary Lock » en anglais) et le deuxième actionneur de verrou 50' est un verrou électrohydraulique primaire appelé ci-après « EHPL » (pour « Electro-Hydraulic Primary Lock »).

La DCU 61 est une électrovanne (dite de commande directionnelle) comprenant plusieurs entrées et plusieurs sorties d'un fluide. Elle est reliée aux vérins hydrauliques 40A-40B par une première boucle d'un circuit hydraulique (dans lequel circule le fluide) et aux verrous (électro)hydrauliques primaires 50-50' par une deuxième boucle du circuit hydraulique. Le HPL 50 et le EHPL 50' sont avantageusement connectés (hydrauliquement) en série avec la DCU 61.

La DCU 61 a pour rôle d'alimenter en énergie les différents actionneurs de l'inverseur de poussée, ici en dirigeant le fluide vers l'une ou l'autre des entrées-sorties D/S des vérins hydrauliques 40A-40B et/ou vers l'entrée P3 du HPL 50 (dont la sortie O3 est avantageusement connectée à l'entrée P4 du EHPL 50').

L'ICU 62 est située entre l'entrée principale Pin du circuit hydraulique et la DCU 61. Elle est chargée d'isoler la DCU 61, les vérins 40A-40B et les verrous 50-50' de l'alimentation hydraulique en l'absence de commande de déploiement, afin d'éviter un déploiement intempestif de l'inverseur de poussée en vol.

La DCU 61 et l'ICU 62 sont pilotées par le calculateur 63 de façon à déployer l'inverseur de poussée. Le calculateur 63 peut être distinct ou faire partie du calculateur de régulation numérique à pleine autorité (FADEC - « Full-Authority Digital Electronic Control » en anglais) de l'aéronef.

Le système de commande 60 peut requérir le déploiement de l'inverseur de poussée selon la séquence suivante.

Lors d'une première phase dite de sur-fermeture des portes (« overstow » en anglais), le calculateur 63 active l'ICU 62 pour qu'il alimente hydrauliquement la DCU 61. La DCU 61 est maintenue dans un état passif, aussi appelée état « OFF ». Dans cet état, la puissance hydraulique est dirigée vers les vérins 40A-40B de façon à sur-fermer les portes 30A-30B (cf. Fig.1). Les verrous 50-50' ne sont pas alimentés par la DCU 61 et maintiennent les crochets 10-10' en forme de S dans la position de verrouillage.

Après avoir respecté une période de temporisation correspondant à la durée maximale de sur-fermeture des portes 30A-30B, le calculateur 63 déclenche une deuxième phase dite de déverrouillage des portes. Il active la DCU 61 pour diriger une partie de la puissance hydraulique vers le HPL 50 afin que celui déplace le premier crochet 10 en forme de S dans la position de déverrouillage. Dès lors que le HPL 50 parvient à déplacer le premier crochet 10 en forme de S, la puissance hydraulique passe du HPL 50 au EHPL 50'. Le EHPL 50' déplace alors le deuxième crochet 10' en forme de S dans la position de déverrouillage. Pendant cette phase de déverrouillage des portes, les vérins 40A-40B sont toujours commandés de façon à sur-fermer les portes (créant ainsi du jeu entre les crochets 10-10' en forme de S et les crochets de verrouillage 31A-31B, 32A-32B correspondants des portes 30A-30B).

Dès lors que l'EHPL 50' parvient à déplacer le deuxième crochet 10' en forme de S dans la position de déverrouillage, la puissance hydraulique traverse l'EHPL 50' et retourne à la DCU 61. Ceci a pour effet de déclencher une troisième phase de la séquence, celle de l'ouverture des portes 30A-30B. En effet, le retour de la puissance hydraulique (via l'entrée IN de la DCU 61) entraîne le basculement de la DCU 61 dans une position où les vérins 40A-40B sont alimentés de façon à ouvrir les portes 30A-30B.

Ainsi, dans le système de commande de la figure 3, les vérins 40A-40B continuent à agir dans le sens de la sur-fermeture des portes 30A-30B tant que les crochets 10-10' en forme de S ne sont pas dans la position de déverrouillage et la commande des vérins 40A-40B pour amener les portes 30A-30B dans la position déployée est immédiatement consécutive au déverrouillage des portes.

Les vérins 40A-40B peuvent ne pas réussir à sur-fermer les portes 30A-30B si le flux qui circule dans la veine aérodynamique exerce sur les portes des efforts aérodynamiques supérieurs aux efforts développés par les vérins. Les efforts aérodynamiques qui s'exercent sur les portes 30A-30B dépendent du régime du moteur générant le flux, par exemple le régime moteur basse pression N1 (aussi appelé régime moteur fan) dans le cas d'un inverseur de poussée détournant le flux secondaire d'un turboréacteur à double flux. Ainsi, pour que les portes 30A-30B puissent être amenées dans la position sur-fermée, le régime moteur N1 doit être inférieur à une valeur seuil, appelée ci-après « N1_{OTD »}, à laquelle les efforts aérodynamiques s'exerçant sur les portes 30A-30B sont égaux aux efforts développés par les vérins 40A-40B.

Or dans une situation de décollage avorté de l'aéronef, le régime moteur est bien supérieur à la valeur seuil N1_{OTD} lorsque le pilote requiert le déploiement de l'inverseur de poussée. Pour amener les portes dans la position sur-fermée, il est donc nécessaire au préalable de diminuer le régime moteur en dessous de la valeur seuil N1_{OTD}.

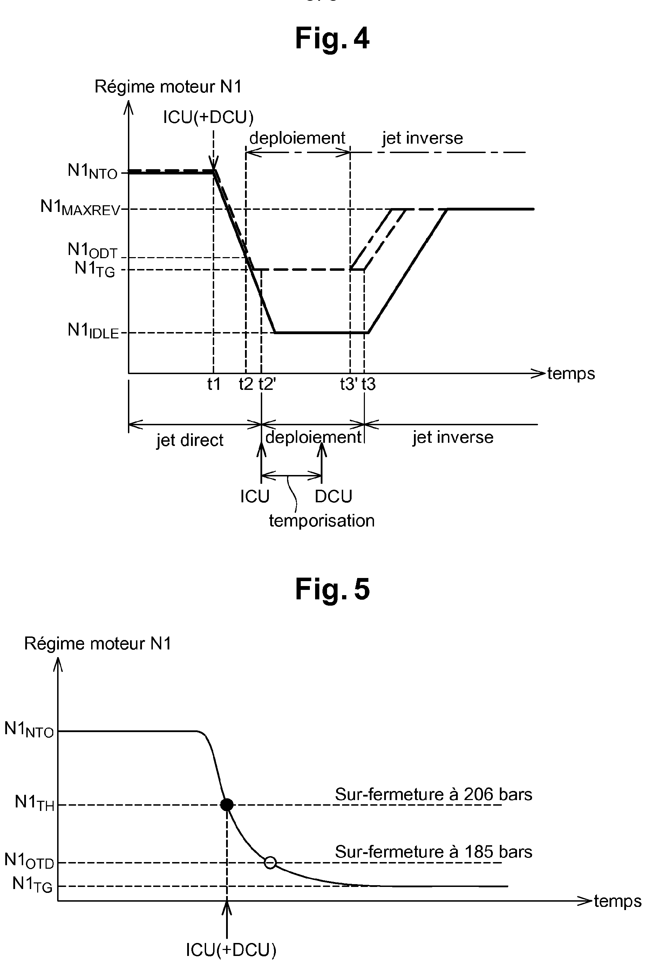

La figure 4 représente par une courbe en trait plein le régime moteur lorsque la séquence décrite ci-dessus est appliquée dans une situation de décollage avorté de l'aéronef.

A l'instant t₁ où le pilote de l'aéronef requiert le déploiement de l'inverseur de poussée (en passant la manette des gaz de la position « décollage » à la position « inverseur de poussée »), le moteur fonctionne en jet direct et le régime moteur N1 est maximal pour faire décoller l'aéronef (N1 = N1_{NTO}). Une diminution du régime moteur N1 est commandée, avec pour valeur de consigne le régime de ralenti N1_{IDLE}. Le régime moteur N1 devient égal à la valeur seuil N1_{OTD} à l'instant t₂. Toutefois, la séquence de déploiement ne commence (c'est-à-dire l'ICU 62 n'est activé) qu'après avoir détecté que le régime moteur N1 est inférieur à la valeur seuil N1_{OTD}, à l'instant t₂'. Pendant une partie du déploiement, le régime moteur N1 continue de diminuer jusqu'à atteindre la valeur de consigne, ici le régime de ralenti N1_{IDLE}. Puis, lorsque le déploiement de l'inverseur de poussée est terminé (c'est-à-dire lorsque les portes 30A-30 sont dans la position déployée) à l'instant ts, le moteur fonctionne en jet inverse et le régime moteur N1 est progressivement augmenté jusqu'à une valeur de poussée inverse maximale N1_{MAXREV}.

On constate qu'avec une telle gestion du régime moteur, la poussée inverse maximale n'est disponible que tardivement, car le moteur décélère jusqu'à un régime minimum (N1_{IDLE}) et prend beaucoup de temps pour réaccélérer.

Dans le cadre de l'invention, il est proposé un procédé de commande d'un inverseur de poussée dans lequel la poussée inverse produite dès la fin du déploiement est plus importante et dans lequel la durée d'indisponibilité de la poussée inverse maximale est réduite. Ce procédé de commande comprend une gestion particulière du régime moteur N1, illustrée par la courbe en trait mixte sur la figure 4.

Dans le procédé de commande selon l'invention, le régime moteur N1 est diminué en suivant une valeur de consigne N1_{TG} inférieure à la valeur seuil N1_{OTD} mais supérieure au régime de ralenti N1_{IDLE}. Ainsi, le moteur décélère moins bas et la phase de ré-accélération dure moins longtemps. En outre, le régime moteur N1 est plus élevé lorsque le déploiement de l'inverseur de poussée est terminé (instant ts).

La valeur de consigne N1_{TG} du régime moteur est de préférence comprise entre 70 % et 95 % de la valeur seuil N1_{OTD} à laquelle les efforts aérodynamiques s'exerçant sur les portes 30A-30B sont égaux aux efforts développés par les vérins 40A-40B.

Dans un mode de mise en oeuvre préférentiel du procédé de commande également représenté par la figure 4, l'ordre de déploiement de l'inverseur de poussée est donné plus tôt, avant que le régime moteur n'atteigne la valeur seuil N1_{OTD}, par exemple à l'instant t₁ où le pilote requiert le déploiement de l'inverseur de poussée (N1 = N1_{NTO}). Autrement dit, les vérins 40A-40B sont commandés de façon à amener les portes 30A-30B dans la position sur-fermée (en activant l'ICU 61 dans le système de commande 60 de la figure 3) avant que le régime moteur N1 n'atteigne la valeur seuil N1_{OTD}. Cette chronologie permet de commencer le déploiement plus tôt, à l'instant t₂ au lieu de l'instant t₂', et rend facultative la comparaison du régime moteur avec la valeur seuil N1_{OTD}. Par conséquent, le déploiement se termine également plus tôt, à l'instant ts' (ts'< ts) sur la figure 4, et la poussée inverse est disponible plus tôt.

Ainsi, les vérins 40A-40B tenteront d'accomplir la sur-fermeture des portes mais n'y parviendront que lorsque le régime moteur aura suffisamment baissé. Cette « surcharge » des vérins pendant un bref instant (de l'ordre de 0,1 s à 1 s) n'est pas de nature à occasionner des pannes de l'inverseur de poussée ou à accélérer son vieillissement.

Avantageusement, les vérins 40A-40B sont commandés pour amener les portes dans la position sur-fermée en même temps que le HPL 50 est commandé pour amener le premier crochet 10 en forme de S dans la position de déverrouillage. Ceci peut être réalisé avec le système de commande de la figure 3 en activant simultanément l'ICU 62 et la DCU 61.

En d'autres termes, la temporisation entre le début de la phase de sur-fermeture des portes et le début de la phase de déverrouillage des portes est supprimée. Le HPL 50 essaye de tirer sur le premier crochet 10 en forme de S jusqu'à ce que les vérins 40A-40B parviennent à sur-fermer les portes, c'est-à-dire jusqu'à ce que le régime moteur soit suffisamment bas pour vaincre les efforts aérodynamiques. Le déverrouillage des portes est ainsi immédiatement consécutif à la sur-fermeture des portes.

Un tel mode de commande est bénéfique lorsque les portes sont sur-fermées dans un laps de temps plus court que celui escompté, par exemple parce que la puissance hydraulique disponible est plus importante que prévue. Il peut occasionner une usure des crochets 10-10' en forme de S et des crochets de déverrouillage 31A-31B, 32A-32B, car ils forcent les uns sur les autres. Toutefois, comme les situations de décollage avorté d'un aéronef sont exceptionnelles (une fois tous les 10000 décollages environ), cette usure des crochets reste très limitée. Elle est par conséquent acceptable.

La pression dans le circuit hydraulique peut varier de façon importante d'une utilisation à l'autre de l'inverseur de poussée, en fonction notamment de la dispersion de fabrication et d'usure ou des conditions d'utilisation du système (température, pression extérieure). Les vérins 40A-40B ne disposent donc pas toujours de la même puissance hydraulique pour effectuer la sur-fermeture des portes 30A-30B.

La figure 5 illustre une façon avantageuse de gérer le régime moteur N1 dans une telle situation. La valeur seuil N1_{OTD} du régime moteur est choisie de façon à correspondre à une valeur minimale des efforts développés par les vérins, autrement dit au minimum de pression hydraulique. Par exemple, si la pression hydraulique varie entre 185 bars et 206 bars, le régime moteur N1 est diminué en suivant une valeur de consigne N1_{TG} inférieure à une première valeur seuil (N1_{OTD}) de régime moteur correspondant à une sur-fermeture des portes à 185 bars. En revanche, les vérins 40A-40B sont avantageusement commandés pour sur-fermer les portes 30A-30B au plus tard lorsque le régime moteur N1 atteint une deuxième valeur seuil N1_{TH} correspondant à une valeur maximale des efforts développés par les vérins, soit dans cet exemple à une sur-fermeture des portes à 206 bars. Ainsi, la séquence de déploiement pourra débuter (par la phase de sur-fermeture des portes) avant que le régime moteur N1 n'atteigne la première valeur seuil N1_{OTD} si la pression disponible est finalement supérieure à 185 bars.

L'inverseur de poussée peut alternativement comporter un capteur de pression hydraulique pour connaître précisément la force que peuvent développer les vérins 40A-40B au moment d'un décollage avorté. La valeur de consigne N1_{TG} est alors déterminée (par le calculateur 63) en fonction de la valeur seuil N1_{OTD} du régime moteur correspondant à cette force.

Le procédé de commande selon l'invention est mis en oeuvre lorsqu'un décollage avorté est détecté. La détection d'un décollage avorté peut être réalisée par le calculateur 63 du système de commande 60, sur la base d'informations provenant du cockpit et/ou du moteur. Par exemple, un décollage avorté est détecté lorsque les conditions suivantes sont réunies :
- l'aéronef est au sol depuis plusieurs minutes ;
- la manette des gaz est dans la position « poussée inverse maximale » ; et
- la manette des gaz était dans la position « décollage » il y a moins d'une minute.

Le procédé de commande selon l'invention a été décrit ci-dessus en prenant pour exemple un inverseur de poussée comprenant des vérins hydrauliques et des verrous (électro)hydrauliques primaires. Il peut cependant être mis en oeuvre avec tout type d'actionneurs, notamment des actionneurs pneumatiques ou électriques. Les dispositifs de verrouillage ne sont pas nécessairement au nombre de deux et peuvent adopter d'autres formes qu'un crochet en S. De manière générale, le procédé de commande selon l'invention est applicable à tout inverseur de poussée de turboréacteur comprenant au moins deux portes, au moins deux actionneurs de porte, au moins un dispositif de verrouillage des portes dans la position fermée et au moins un actionneur de verrou associé au dispositif de verrouillage.

De la même façon, le circuit hydraulique, la DCU 61 et l'ICU 62 du système de commande 60 représenté par la figure 3 peuvent être remplacés par tous autres moyens (électroniques notamment) configurés pour commander les actionneurs de portes dans la position sur-fermée ou déployée et pour commander l'actionneur de verrou dans la position de déverrouillage.

## Revendications

1. Procédé de commande d'un inverseur de poussée de turboréacteur lors d'un décollage avorté d'aéronef, l'inverseur de poussée comprenant :
- des portes (30A, 30B) mobiles entre une position fermée dans laquelle les portes assurent la continuité d'une veine aérodynamique, une position sur-fermée dans laquelle les portes (30A, 30B) rentrent partiellement dans la veine aérodynamique et une position déployée dans laquelle les portes (30A, 30B) détournent au moins une partie d'un flux parcourant la veine aérodynamique pour générer une poussée inverse ;
- des actionneurs de porte (40A, 40B) configurés pour déplacer les portes (30A, 30B) entre les positions fermée, sur-fermée et déployée ;
- un dispositif de verrouillage (10) des portes (30A, 30B) dans la position fermée, mobile entre une position de verrouillage et une position de déverrouillage ;
- un actionneur de verrou (50) configuré pour déplacer le dispositif de verrouillage (10) entre les positions de verrouillage et de déverrouillage ;
le procédé comprenant les étapes suivantes :
- diminuer le régime moteur (N1) du turboréacteur en suivant une valeur de consigne (N1_{TG}) inférieure à une première valeur seuil de régime moteur (N1_{OTD}) à laquelle les efforts aérodynamiques s'exerçant sur les portes (30A, 30B) sont égaux aux efforts développés par les actionneurs de porte (40A, 40B) ;
- commander les actionneurs de porte (40A, 40B) de façon à amener les portes (30A, 30B) dans la position sur-fermée ;
- commander l'actionneur de verrou (50) de façon à amener le dispositif de verrouillage (10) dans la position de déverrouillage ; et
- lorsque le dispositif de verrouillage (10) est dans la position de déverrouillage, commander les actionneurs de porte (40A, 40B) de façon à amener les portes (30A, 30B) dans la position déployée ;
procédé dans lequel la valeur de consigne (N1_{TG}) du régime moteur est supérieure au régime de ralenti (N1_{IDLE}).

2. Procédé selon la revendication 1, dans lequel la valeur de consigne (N1_{TG}) du régime moteur est comprise entre 70 % et 95 % de la première valeur seuil de régime moteur (N1_{OTO}).

3. Procédé selon l'une des revendications 1 et 2, dans lequel les actionneurs de porte (40A, 40B) sont commandés de façon à amener les portes (30A, 30B) dans la position sur-fermée avant que le régime moteur (N1) n'atteigne la première valeur seuil de régime moteur (N1_{OTD}).

4. Procédé selon l'une quelconque des revendications 1 à 3, dans lequel les actionneurs de porte (40A, 40B) et l'actionneur de verrou (50) sont commandés simultanément pour amener respectivement les portes (30A, 30B) dans la position sur-fermée et le dispositif de verrouillage (10) dans la position de déverrouillage.

5. Procédé selon l'une quelconque des revendications 1 à 4, dans lequel les actionneurs de porte (40A, 40B) sont commandés de façon à amener les portes (30A, 30B) dans la position sur-fermée tant que le dispositif de verrouillage (10) n'est pas dans la position de déverrouillage.

6. Procédé selon l'une quelconque des revendications 1 à 5, dans lequel les actionneurs de porte (40A, 40B) sont commandés de façon à amener les portes (30A, 30B) dans la position déployée dès lors que le dispositif de verrouillage (10) passe dans la position de déverrouillage.

7. Procédé selon l'une quelconque des revendications 1 à 6, dans lequel la première valeur seuil de régime moteur correspond à une valeur minimale des efforts développés par les actionneurs de porte et dans lequel les actionneurs de porte (40A, 40B) sont commandés de façon à amener les portes (30A, 30B) dans la position sur-fermée au plus tard lorsque le régime moteur (N1) atteint une deuxième valeur seuil de régime moteur (N1_{TH}) correspondant à une valeur maximale des efforts développés par les actionneurs de porte.

8. Système de commande (60) d'un inverseur de poussée de turboréacteur, l'inverseur de poussée comprenant :
- des portes (30A, 30B) mobiles entre une position fermée dans laquelle les portes assurent la continuité d'une veine aérodynamique, une position sur-fermée dans laquelle les portes (30A, 30B) rentrent partiellement dans la veine aérodynamique et une position déployée dans laquelle les portes (30A, 30B) détournent au moins une partie d'un flux parcourant la veine aérodynamique pour générer une poussée inverse ;
- des actionneurs de porte (40A, 40B) configurés pour déplacer les portes (30A, 30B) entre les positions fermée, sur-fermée et déployée ;
- un dispositif de verrouillage (10) des portes (30A, 30B) dans la position fermée, mobile entre une position de verrouillage et une position de déverrouillage ;
- un actionneur de verrou (50) configuré pour déplacer le dispositif de verrouillage (10) entre les positions de verrouillage et de déverrouillage ;
le système comprenant des moyens (61, 62, 63) configurés pour mettre en oeuvre un procédé de commande selon l'une quelconque des revendications 1 à 7.

9. Système de commande (60) selon la revendication 8, comprenant :
- une unité de commande directionnelle (61) configurée pour alimenter en énergie les actionneurs de porte (40A, 40B) et l'actionneur de verrou (50) ;
- une unité de commande d'isolation (62) configurée pour isoler l'unité de commande directionnelle (61) d'une source d'alimentation (Pin) ;
- un calculateur (63) configuré pour piloter l'unité de commande directionnelle (61) et l'unité de commande d'isolation (62).

## Patentansprüche

1. Verfahren zur Steuerung einer Schubumkehrvorrichtung eines Turbotriebwerks während eines abgebrochenen Starts eines Luftfahrzeugs, wobei die Schubumkehrvorrichtung umfasst:
- Klappen (30A, 30B), die zwischen einer geschlossenen Position, in der die Klappen die Kontinuität eines Windkanals sicherstellen, und einer mehr als geschlossenen Position, in der die Klappen (30A, 30B) teilweise in den Windkanal hineinreichen und einer ausgeklappten Position beweglich sind, in der die Klappen (30A, 30B) zumindest einen Teil des Luftstroms, der den Windkanal durchströmt, ablenken, um einen Gegenschub zu erzeugen;
- Klappenstellglieder (40A, 40B), die so ausgelegt sind, dass sie die Klappen (30A, 30B) zwischen den Stellungen geschlossen, mehr als geschlossen und ausgeklappt bewegen;
- eine Verriegelungsvorrichtung (10) der Klappen (30A, 30B) in der geschlossenen Position, die zwischen einer Verriegelungsposition und einer Entriegelungsposition beweglich ist;
- ein Riegelstellglied (50), das so ausgelegt ist, dass es die Verriegelungsvorrichtung (10) zwischen der Verriegelungs- und der Entriegelungsposition hin und her bewegt;
wobei das Verfahren die folgenden Schritte umfasst:
- Verringerung der Motordrehzahl (N1) des Turbotriebwerks durch Befolgen eines Sollwerts (N1_{TG}), der unter einem ersten Grenzwert für die Motordrehzahl (N1_{OTD}) liegt, bei dem die auf die Klappen (30A, 30B) wirkenden aerodynamischen Kräfte gleich den von den Klappenstellgliedern (40A, 40B) entwickelten Kräften sind;
- Steuern der Klappenstellglieder (40A, 40B) derart, dass die Klappen (30A, 30B) in die mehr als geschlossene Position gebracht werden;
- Steuern des Riegelstellglieds (50) derart, dass die Verriegelungsvorrichtung (10) in die Entriegelungsposition gebracht wird; und
- wenn die Verriegelungsvorrichtung (10) sich in der Entriegelungsposition befindet, Steuern der Klappenstellglieder (40A, 40B) derart, dass die Klappen (30A, 30B) in die ausgeklappte Position gebracht werden;
Verfahren, bei dem der Sollwert (N1_{TG}) für die Motordrehzahl höher als die Leerlaufdrehzahl ist (NI_{IDLE}).

2. Verfahren nach Anspruch 1, in dem der Sollwert (N1_{TG}) für die Motordrehzahl zwischen 70 % und 95 % des ersten Grenzwerts für die Motordrehzahl (N1_{OTD}) beträgt.

3. Verfahren nach einem der Ansprüche 1 und 2, bei dem die Klappenstellglieder (40A, 40B) so gesteuert werden, dass sie die Klappen (30A, 30B) in die mehr als geschlossene Position bewegen, bevor die Motordrehzahl (N1) den ersten Grenzwert für die Motordrehzahl (N1_{OTD}) erreicht.

4. Verfahren nach einem der Ansprüche 1 bis 3, bei dem die Klappenstellglieder (40A, 40B) und das Riegelstellglied (50) gleichzeitig gesteuert werden, um die Klappen (30A, 30B) in die mehr als geschlossene Position und die Verriegelungsvorrichtung (10) in die Entriegelungsposition zu bringen.

5. Verfahren nach einem der Ansprüche 1 bis 4, bei dem die Klappenstellglieder (40A, 40B) derart gesteuert werden, dass die Klappen (30A, 30B) in die mehr als geschlossene Position gebracht werden, solange die Verriegelungsvorrichtung (10) nicht in der Entriegelungsposition ist.

6. Verfahren nach einem der Ansprüche 1 bis 5, bei dem die Klappenstellglieder (40A, 40B) derart gesteuert werden, dass die Klappen (30A, 30B) in die ausgeklappte Position gebracht werden, sobald die Verriegelungsvorrichtung (10) in die Entriegelungsposition übergeht.

7. Verfahren nach einem der Ansprüche 1 bis 6, bei dem der erste Grenzwert für die Motordrehzahl einem Mindestwert der von den Klappenstellgliedern (40A, 40B) entwickelten Kräften entspricht und bei dem die Klappenstellglieder (40A, 40B) derart gesteuert werden, dass sie die Klappen (30A, 30B) spätestens dann in die mehr als geschlossene Position bringen, wenn die Motordrehzahl (N1) einen zweiten Grenzwert für die Motordrehzahl (N1_{TH}) erreicht, der dem maximalen Wert der von den Klappenstellgliedern entwickelten Kräften entspricht.

8. Steuerungssystem (60) einer Schubumkehrvorrichtung für ein Turbotriebwerk, wobei die Schubumkehrvorrichtung umfasst:
- Klappen (30A, 30B), die zwischen einer geschlossenen Position, in der die Klappen die Kontinuität eines Windkanals sicherstellen, und einer mehr als geschlossenen Position, in der die Klappen (30A, 30B) teilweise in den Windkanal hineinreichen und einer ausgeklappten Position beweglich sind, in der die Klappen (30A, 30B) zumindest einen Teil des Luftstroms, der den Windkanal durchströmt, ablenken, um einen Gegenschub zu erzeugen;
- Klappenstellglieder (40A, 40B), die so ausgelegt sind, dass sie die Klappen (30A, 30B) zwischen den Stellungen geschlossen, mehr als geschlossen und ausgeklappt bewegen;
- eine Verriegelungsvorrichtung (10) der Klappen (30A, 30B) in der geschlossenen Position, die zwischen einer Verriegelungsposition und einer Entriegelungsposition beweglich ist;
- ein Riegelstellglied (50) das so ausgelegt ist, dass es die Verriegelungsvorrichtung (10) zwischen der Verriegelungs- und der Entriegelungsposition hin und her bewegt;
wobei das System Mittel (61, 62, 63) umfasst, die so ausgelegt sind, dass sie ein Steuerungsverfahren nach einem der Ansprüche 1 bis 7 ausführen.

9. Steuerungsverfahren (60) nach Anspruch 8, umfassend:
- eine Richtungssteuereinheit (61), die so ausgelegt ist, dass die Klappenstellglieder (40A, 40B) und das Riegelstellglied (50) mit Energie versorgt werden;
- eine Steuereinheit zur Isolierung (62), die so ausgelegt ist, dass sie die Richtungssteuereinheit (61) von einer Stromversorgungsquelle (Pin) isoliert;
- einen Rechner (63), der so ausgelegt ist, dass er die Richtungssteuereinheit (61) und die Steuereinheit zur Isolierung (62) steuert.

## Claims

1. Method for controlling a turbojet engine thrust reverser during an aborted aircraft takeoff, the thrust reverser comprising:
- doors (30A, 30B) that can move between a stowed position wherein the doors ensure the continuity of an aerodynamic flow path, an overstowed position wherein the doors (30A, 30B) partially enter into the aerodynamic flow path and a deployed position wherein the doors (30A, 30B) divert at least a part of a flow passing through the aerodynamic flow path to generate a reverse thrust;
- door actuators (40A, 40B) configured to move the doors (30A, 30B) between the stowed, overstowed and deployed positions;
- a device (10) for locking the doors (30A, 30B) in the stowed position, moveable between a locking position and an unlocking position;
- a lock actuator (50) configured to move the locking device (10) between the locking and unlocking positions;
the method comprising the following steps:
- decreasing the engine speed (N1) of the turbojet engine by following a setpoint value (N1_{TG}) below a first engine speed threshold value (N1_{OTD}) at which the aerodynamic forces being exerted on the doors (30A, 30B) are equal to the forces developed by the door actuators (40A, 40B);
- controlling the door actuators (40A, 40B) so as to bring the doors (30A, 30B) into the overstowed position;
- controlling the lock actuator (50) so as to bring the locking device (10) into the unlocking position; and
- when the locking device (10) is in the unlocking position, controlling the door actuators (40A, 40B) so as to bring the doors (30A, 30B) into the deployed position;
method wherein the setpoint value (N1_{TG}) of the engine speed is above the idle speed (N1_{IDLE}).

2. Method according to claim 1, wherein the engine speed setpoint value (N1_{TG}) is comprised between 70 % and 95 % of the first engine speed threshold value (N1_{OTD}).

3. Method according to one of claims 1 and 2, wherein the door actuators (40A, 40B) are controlled in such a way as to bring the doors (30A, 30B) into the overstowed position before the engine speed (N1) reaches the first engine speed threshold value (N1_{OTD}).

4. Method according to any of claims 1 to 3, wherein the door actuators (40A, 40B) and the lock actuator (50) are controlled simultaneously to bring respectively the doors (30A, 30B) into the overstowed position and the locking device (10) into the unlocking position.

5. Method according to any of claims 1 to 4, wherein the door actuators (40A, 40B) are controlled in such a way as to bring the doors (30A, 30B) into the overstowed position as long as the locking device (10) is not in the unlocking position.

6. Method according to any of claims 1 to 5, wherein the door actuators (40A, 40B) are controlled in such a way as to bring the doors (30A, 30B) into the deployed position as soon as the locking device (10) passes into the unlocking position.

7. Method according to any of claims 1 to 6, wherein the first engine speed threshold value corresponds to a minimum value of the forces developed by the door actuators and wherein the door actuators (40A, 40B) are controlled in such a way as to bring the doors (30A, 30B) into the overstowed position at the latest when the engine speed (N1) reaches a second engine speed threshold value (N1_{TH}) corresponding to a maximum value of the forces developed by the door actuators.

8. System (60) for controlling a turbojet engine thrust reverser, the thrust reverser comprising:
- doors (30A, 30B) that can move between a stowed position wherein the doors ensure the continuity of an aerodynamic flow path, an overstowed position wherein the doors (30A, 30B) partially enter into the aerodynamic flow path and a deployed position wherein the doors (30A, 30B) divert at least a part of a flow passing through the aerodynamic flow path to generate a reverse thrust;
- door actuators (40A, 40B) configured to move the doors (30A, 30B) between the stowed, overstowed and deployed positions;
- a device (10) for locking the doors (30A, 30B) in the stowed position, moveable between a locking position and an unlocking position;
- a lock actuator (50) configured to move the locking device (10) between the locking and unlocking positions;
the system comprising means (61, 62, 63) configured to implement a control method according to any of claims 1 to 7.

9. Control system (60) according to claim 8, comprising:
- a directional control unit (61) configured to supply with energy the door actuators (40A, 40B) and the lock actuator (50);
- an isolation control unit (62) configured to isolate the directional control unit (61) from a power source (Pin);
- a calculator (63) configured to drive the directional control unit (61) and the isolation control unit (62).
